(19) Europäisches Patentamt
European Patent Office
Office européen des brevets

(11) **EP 3 687 872 B1**

(12) **EUROPÄISCHE PATENTSCHRIFT**

(45) Veröffentlichungstag und Bekanntmachung des Hinweises auf die Patenterteilung:
**07.07.2021 Patentblatt 2021/27**

(21) Anmeldenummer: **18779268.4**

(22) Anmeldetag: **18.09.2018**

(51) Int Cl.:
**B60T 17/00** *(2006.01)*

(86) Internationale Anmeldenummer:
**PCT/EP2018/075138**

(87) Internationale Veröffentlichungsnummer:
**WO 2019/063350 (04.04.2019 Gazette 2019/14)**

(54) **GERÄUSCHDÄMPFER FÜR DRUCKLUFTSYSTEME UND EIN VERFAHREN ZU DESSEN HERSTELLUNG**

NOISE DAMPER FOR COMPRESSED AIR SYSTEMS AND A METHOD FOR THE PRODUCTION OF SAME

AMORTISSEUR DE BRUIT POUR SYSTÈMES À AIR COMPRIMÉ ET PROCÉDÉ POUR LE PRODUIRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.09.2017 DE 102017122215**

(43) Veröffentlichungstag der Anmeldung:
**05.08.2020 Patentblatt 2020/32**

(73) Patentinhaber: **KNORR-BREMSE Systeme für Nutzfahrzeuge GmbH**
**80809 München (DE)**

(72) Erfinder:
• **SOVAGO, Szabolcs**
**6000 Kecskemét (HU)**
• **TANCZOS, Miklos**
**6000 Kecskemet (HU)**
• **FEKETE, Marton**
**1173 Budapest (HU)**
• **BUJDOSO, Daniel**
**6070 Izsák (HU)**

(56) Entgegenhaltungen:
**EP-A1- 0 093 842    EP-A1- 0 379 160**
**DE-A1- 2 910 209    DE-A1- 4 040 278**
**US-A- 4 424 883**

EP 3 687 872 B1

**Beschreibung**

Die vorliegende Erfindung bezieht sich auf einen Geräuschdämpfer für Druckluftsysteme, einem Druckluftsystem und ein Verfahren zur Herstellung von Geräuschdämpfern.

Druckluftsysteme lassen oft innerhalb kürzester Zeit große Mengen komprimierter Luft in die Umgebung frei. Dieser Entspannungsprozess kann erhebliche Geräusche produzieren. Um die Geräuschemission auf einem zulässigen Niveau zu halten, sind Geräuschdämpfer für Druckluftsysteme häufig notwendig.

Das Gehäuse von solchen Geräuschdämpfern kann direkt mit einem pneumatischen Ventil, zum Beispiel über einen Bajonettverschluss verbunden werden. Ein bekanntes System ist beispielsweise in der EP 0 708 007 B1 offenbart, wobei der Ventilkörper einen Auslasskanal aufweist, der teilweise in dem Einlasskanal der Geräuschdämpfereinheit integriert ist. Eine weitere Möglichkeit besteht darin, eine kanalförmige Zwischenkomponente vorzusehen, die beispielsweise als Teil des Gehäuses des Geräuschdämpfers eine Verbindung zu dem Auslasskanal eines Ventils bereitstellt und die Geräuschdämpfereinheit an einem pneumatischen Ventil befestigt. Zur Geräuschdämpfung umfassen die für Druckluftsysteme geeignete Geräuschdämpfer typischerweise einen Geräuschdämpfungsbereich, der mit schallreduzierendem Material gefüllt ist und innerhalb eines Gehäuses untergebracht ist. Ein solches System ist in der DE 197 01 361 C1 offenbart.

Um die Performance des Geräuschdämpfers zu erhöhen, ist es beispielsweise möglich, die Passage der Druckluft in dem schallreduzierenden Material zu vergrößern. Dazu kann beispielsweise ein größeres Gehäuse für das geräuschreduzierende Material genutzt werden. Dies ist jedoch häufig nur schwer umsetzbar, da oft nicht ausreichend Platz zur Verfügung steht. Bei Nutzfahrzeugen ist der zur Verfügung stehende Raum zunehmend begrenzt und größere Geräuschdämpfer können kaum untergebracht werden. Es ist ebenfalls möglich, einen längeren Flussweg für die Druckluft in dem geräuschreduzierenden Material dadurch zu erreichen, dass der Druckluftstrom durch das geräuschreduzierende Material mehrfach abgelenkt und umgelenkt wird. Ein solches System ist zum Beispiel in der WO 2009/152884 A3 offenbart. Dieses System ist jedoch nachteilig, da es einen höheren Flusswiderstand für die Druckluft hat. Die Richtungswechsel können außerdem dazu führen, dass es zu Verstopfungen oder Vereisungen innerhalb des geräuschreduzierenden Materials kommt. In der Regel weist die Druckluft nämlich Verschmutzungen und/oder eine hohe Feuchtigkeit auf, sodass der plötzliche Druckabfall zu einer erheblichen Abkühlung führt und die Verschmutzung bzw. die Feuchtigkeit sich leicht an verschiedenen Stellen niederschlagen kann bzw. zu Verklumpungen führt.

Bei einem weiteren konventionellen Geräuschdämpfer (z.B. in DE 4 040 278 A1), fließt die Druckluft zunächst in einen freien Raum großen Volumens, der mit einem Bereich verbunden ist, in welchem sich das geräuschreduzierende Material befindet. Dazu ist eine Lochplatte zwischen den beiden Bereichen vorgesehen, die den Druckluftfluss in das geräuschreduzierende Material einleitet. Aber auch in diesem Geräuschdämpfer wird der Druckluftstrom mehrfach umgelenkt, was nicht optimal ist und zu den o.g. Verklumpungen/Abscheidungen führen kann.

In der DE 10 2013 013 281 A1 wird der Druckluftfluss durch eine gekrümmte Oberfläche zwischen einem Einlassbereich und einem Bereich mit dem geräuschreduzierenden Material gezielt gelenkt, wozu eine zentrale Öffnung und Randdurchlässe vorgesehen sind. Oberhalb des geräuschreduzierenden Materials ist außerdem ein Entspannungsbereich vorgesehen, der mit den Randdurchlässen verbunden ist. Jedoch hat sich gezeigt, dass auch diese Druckluftführung keine ausreichende Geräuschreduktion erreicht. EP 0 093 842 offenbart einen weiteren bekannten Geräuschdämpfer für Ventileinrichtungen von Druckluftbremsanlagen für Fahrzeugbremsen. Ebenso offenbart DE 29 10 209 einen konventionellen Geräuschdämpfer für Ventileinrichtungen im Druckluftbremsanlagen.

Da zunehmende Umweltauflagen zu immer größeren Anforderungen hinsichtlich der Geräuschreduktion für Druckluftsysteme führen, sind die bekannten Systeme nicht mehr effektiv genug, um die erforderliche hohe Geräuschreduktion zu erreichen und gleichzeitig das Risiko für Verstopfungen und Vereisungen ausreichend auszuschließen bzw. platzsparend untergebracht zu werden.

Daher besteht ein Bedarf nach weiteren Systemen, die eine effektive Geräuschdämpfung für Druckluftsysteme insbesondere für Bremssysteme bereitstellen.

Zumindest ein Teil der obengenannten Probleme wird durch einen Geräuschdämpfer nach Anspruch 1, ein pneumatisches Bremsdrucksystem nach Anspruch 13 und ein Verfahren zur Herstellung des Geräuschdämpfers nach Anspruch 14 gelöst. Die abhängigen Ansprüche definieren weitere vorteilhafte Ausführungsformen.

Die vorliegende Erfindung bezieht sich auf einen Geräuschdämpfer für Druckluftsysteme, insbesondere für Bremssysteme von Nutzfahrzeugen. Der Geräuschdämpfer umfasst ein Gehäuse mit einem Einlasskanal für einen Druckluftstrom und einer Kammer zur Aufnahme von Schalldämpfungsmaterial. Der Einlasskanal und die Kammer sind senkrecht zum Druckluftstrom durch eine Trennplatte getrennt, die in einem zentralen Bereich geschlossen und in einem äußeren Umfangsbereich des Druckluftstromes oder des Einlasskanals mehrere Öffnungen aufweist, um die Druckluft direkt in die Kammer einzuleiten. Die Druckluft kann insbesondere nach dem Passieren der Öffnungen direkt in das optional vorhandene Schalldämpfungsmaterial eingeleitet werden, und zwar ohne umgeleitet zu werden und ohne Zwischenkammern oder Luftspalte passieren zu müssen.

Das Schalldämpfungsmaterial kann, muss aber nicht in der Kammer vorhanden sein. Die Erfindung soll nicht auf ein bestimmtes Schalldämpfungsmaterial eingeschränkt werden, solange es dazu geeignet ist, den Schall des Druckluftstromes oder hindurchgehende Schallwellen zu dämpfen. Es kann beispielsweise eine Fadenmaterial in Webe-, Häkel-, oder Maschenstruktur aber auch eine granulare Struktur aufweisen, wobei die Form, Größe, Festigkeit, Porosität, etc. so gewählt ist, dass es einerseits den Druckluftstrom wenig behindert, anderseits aber den Schall effizient dämpft, wobei der Druckluftstrom von dem Einlasskanal hin zu Austrittsöffnungen im Gehäuse verläuft.

Optional weisen die mehreren Öffnungen in der Trennplatte entlang des Druckluftstromes in die Kammer hinein einen sich verbreitenden Querschnitt auf. Das Gehäuse kann außerdem auf einer Höhe der Kammer einen Schulterbereich aufweisen, sodass die Kammer entlang des Druckluftstromes eine größere Querschnittfläche aufweist als der Einlasskanal. Der Querschnitt jeder einzelnen Öffnung verbreitert sich dadurch in Luftstromrichtung und kann in einem Verteilungskanal enden. Damit wird das Schalldämpfungsmaterial optimal genutzt. Beispielsweise können die Öffnungen gleichmäßig nur in einem äußeren Umfangsbereich der Trennplatte vorhanden sein.

Optional ist das Schalldämpfungsmaterial in direktem Kontakt zu der Trennplatte und befindet sich unter einer Vorspannung in der Kammer, sodass der Druckluftstrom nach einem Passieren der Öffnungen direkt in das Schalldämpfungsmaterial gelangt und auch im Betrieb ein Luftspalt zwischen Schalldämpfungsmaterial und der Trennplatte vermieden wird. Der Luftspalt kann jeder Form von Spalt oder Lücke sein, wo kein Schalldämpfungsmaterial vorhanden ist. Gemäß Ausführungsbeispielen ist nirgends in der Kammer ein solcher Spalt vorhanden, auch nicht während des Betriebes, wenn es zu erheblichen Druckschwankungen kommt. Um dies zu erreichen, kann optional das Schalldämpfungsmaterial bis 10 % elastisch komprimiert in der Kammer angeordnet sein.

Optional umfasst das Gehäuse entlang des Druckluftstromes, gegenüberliegend zu der Trennplatte, eine Bodenplatte (Austrittsplatte oder Auslassplatte) mit einer Vielzahl von Austrittsöffnungen für den Druckluftstrom, wobei die Austrittsöffnungen insbesondere als ein wabenförmiges Muster in der Bodenplatte ausgebildet sind. Die beispielhafte wabenförmige Struktur bietet dabei eine sehr gute mechanische Stabilität verbunden mit einem sehr guten Gewichtsverhältnis. Es ist ebenfalls möglich, das Gehäuse so zu bilden, dass keine Austrittsöffnung dichter an den Öffnungen in der Trennplatte ist als die Entfernung zwischen der Trennplatte und der Bodenplatte.

Optional bildet die Bodenplatte eine Einbuchtung in die Kammer hinein. Durch eine solche konkave Form, betrachtet von einer Gehäuseaußenseite (oder konvexe Form, wenn betrachtet von einer Gehäuseinnenseite), wird eine Festigkeit der Bodenplatte erhöht. Damit wird weiter erreicht, dass das geräuschreduzierende Material bei der Montage des Gehäuses hin zu dem Einlasskanal gedrückt wird. Dadurch wird das Bilden eines Spaltes verhindert.

Optional umfasst das Gehäuse ein erstes Gehäuseteil und ein zweites Gehäuseteil, wobei das erste Gehäuseteil und das zweite Gehäuseteil Verbindungsmittel aufweisen, um das erste Gehäuseteil und das zweite Gehäuseteil fest und dicht miteinander zu verbinden. Die Verbindungsmittel können beispielsweise zumindest eines dem Folgenden umfassen:

- einen Bajonettverschluss;
- eine Einrastverbindung;
- eine Nutverbindung;
- eine Klebverbindung.

Eine Spaltbildung zwischen den zwei Gehäuseteile kann eine Öffnung bilden, und zwar im Bereich, wo R<L und kein Auslass erwünscht ist.

Diese Verbindungen können auch kombiniert werden. So ist es ebenfalls möglich, dass die beiden Gehäuseteile innerhalb der Nut miteinander verklebt oder versiegelt werden, um eine ausreichende Abdichtung sicherzustellen.

Die Verbindungsmittel stellen insbesondere eine dichte Verbindung zwischen dem ersten Gehäuseteil und dem zweiten Gehäuseteil bereit, um einen unerwünschten Luftaustritt zwischen dem ersten Gehäuseteil und dem zweiten Gehäuseteil zu verhindern. Dazu können entsprechende Dichtungen vorgesehen sein oder die Kontaktflächen sind entsprechend eben gestaltet, so dass die gewünschte Dichtheit durch einen geeigneten Anpressdruck erreicht werden kann.

Optional umfasst der Geräuschdämpfer Verstärkungselemente, die an zumindest einer der folgenden Positionen an dem Gehäuse ausgebildet sind:

- Verbindungsbereich zwischen dem Schulterbereich und dem Einlasskanal;
- ringförmig entlang eines äußeren zylindrischen Umfanges der Kammer;
- an den Austrittsöffnungen, wobei die Verstärkungselemente insbesondere radiale Rippen und konzentrische Rippen umfassen, zwischen denen die Austrittsöffnungen ausgebildet sind.

Da das Material des Gehäuses beispielsweise ein Kunststoff ist oder umfassen kann, erhöhen diese Verstärkungselemente die Festigkeit des Gehäuses und verbessern somit die Geräuschdämpfung deutlich (z.B. werden Vibrationen verhindert).

Optional sind die Austrittsöffnungen und/oder die Verstärkungselemente an der Bodenplatte derart ausgebildet, dass der Druckluftstrom teilweise seitlich in radialer Richtung austritt (bezüglich einer axialen Achse des Geräuschdämpfers), auch wenn die axiale Ausströmung aus irgendwelchen Gründen verhindert wird.

Die vorliegende Erfindung bezieht sich auch auf ein pneumatisches Bremssystem eines Nutzfahrzeuges oder auf das Nutzfahrzeug selbst mit einer Entlüftungseinrichtung (z.B. ein Entlüftungsventil), wobei das pneumatische Bremssystem einen Geräuschdämpfer, wie er zuvor beschrieben wurde, aufweist, dessen Drucklufteinlass mit der Entlüftungseinrichtung verbunden ist. Der Geräuschdämpfer kann beispielsweise über eine Schraub- oder eine Einrastverbindung mit einem Auslass (Entlüftung) eines Ventils verbunden werden.

Die vorliegende Erfindung bezieht sich auch auf ein Verfahren zur Herstellung eines Geräuschdämpfers für Druckluftsysteme, insbesondere für Bremssysteme von Nutzfahrzeuge. Das Verfahren umfasst ein Bilden eines Gehäuses durch folgende Schritte:

- Ausbilden eines Einlasskanals für einen Druckluftstrom;
- Ausbilden einer Kammer zur Aufnahme von Schalldämpfungsmaterial;
- Ausbilden einer Trennplatte, die senkrecht zum Druckluftstrom den Einlasskanal und die Kammer trennt; und
- Ausbilden von mehreren Öffnungen in einem äußeren Umfangsbereich des Druckluftstromes, um die Druckluft in die Kammer einzuleiten.

Es versteht sich, dass die Aufzählung der Verfahrensschritte keine bestimmte Reihenfolge bei deren Ausführung impliziert. Sie können in dieser oder in einer anderen Reihenfolge angeführt werden. Außerdem können alle Merkmale des Geräuschdämpfers durch weitere optionale Verfahrensschritte hergestellt werden. Insbesondere kann das Verfahren das Einbringen des Schalldämpfungsmateriales und ein Zusammenfügen der verschiedenen Gehäuseteile umfassen. Außerdem kann das Verfahren so ausgeführt werden, dass das Schalldämpfungsmaterial unter einer Vorspannung in der Kammer sich befindet.

Ausführungsbeispiele lösen zumindest einen Teil der obengenannten Probleme durch einen Geräuschdämpfer, wenn die Kammer mit dem geräuschreduzierende Material (Schalldämpfungsmaterial) gefüllt ist und eine Geräuschreduktion bewirkt wird, wobei die Druckluft über die Öffnungen in der Peripherie eingeleitet wird. Gleichzeitig sind die Flussrichtungen, in denen sich der Druckluftstrom ausbreitet, optimiert und es treten nur tolerierbare kleine Deformationen des beispielhaften Kunststoffgehäuses auf - auch wenn es während des Entlüftens eines beispielhaften pneumatischen Ventils zu hohen inneren Druckänderungen kommt.

Außerdem vermeiden Ausführungsbeispiele das Ausbilden eines Spaltes (oder einer Lücke) zwischen den Gehäuseteilen. Bei konventionellen Schalldämpfern treten infolge des plötzlichen Druckanstieges innerhalb des Gehäuses solche Spalte sowohl an oberen als auch unteren Gehäuseabschnitten auf bzw. sind dort ausdrücklich vorgesehen. Diese Spalten machen die Geräuschreduktion ineffizient, da es zu einem zusätzlichen Druckluftfluss kommt. Da Ausführungsbeispiele sicher Spalte vermeiden tritt auch dieser Effekt nicht auf.

Die Ausführungsbeispiele der vorliegenden Erfindung werden besser verstanden von der folgenden detaillierten Beschreibung und den beiliegenden Zeichnungen der unterschiedlichen Ausführungsbeispiele, die jedoch nicht so verstanden werden sollten, dass sie die Offenbarung auf die spezifischen Ausführungsformen einschränken, sondern lediglich der Erklärung und dem Verständnis dienen.

Fig. 1A,B   zeigen einen Geräuschdämpfer gemäß einem Ausführungsbeispiel der vorliegenden Erfindung.

Fig. 2   zeigt eine vergrößerte Darstellung einer Öffnung gemäß einem weiteren Ausführungsbeispiel.

Fig. 3   zeigt eine Querschnittsansicht durch den Geräuschdämpfer.

Fig. 4A-4C   zeigen weitere Ansichten zu einer möglichen Ausgestaltung der Bodenplatte mit den Austrittsöffnungen gemäß weiterer Ausführungsbeispiele.

Fig. 5   zeigt eine beispielhafte Verbindung zwischen dem ersten Gehäuseteil und dem zweiten Gehäuseteil gemäß weiterer Ausführungsbeispiele.

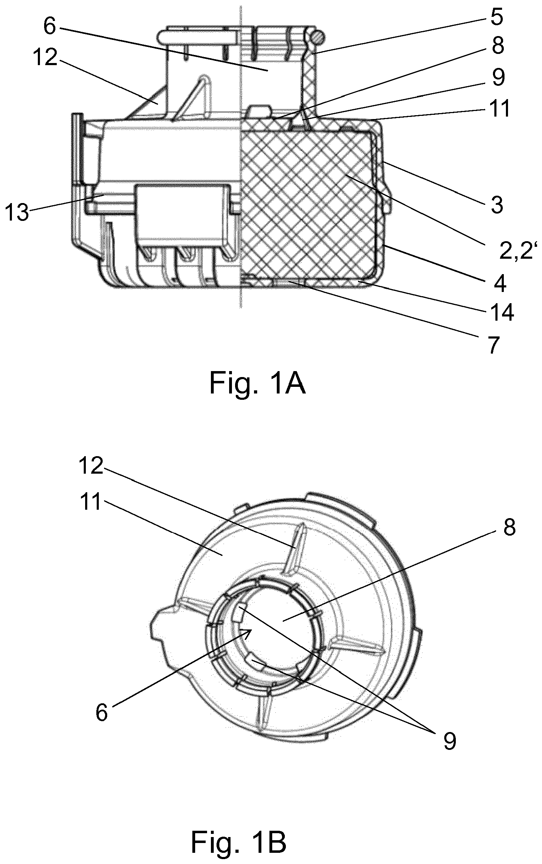

**Fig. 1A** zeigt eine Außenansicht mit einem Teilschnitt durch einen Geräuschdämpfer gemäß einem Ausführungsbeispiel der vorliegenden Erfindung. Der Geräuschdämpfer ist geeignet für Druckluftsysteme, insbesondere für Bremssysteme von Nutzfahrzeugen, und umfasst ein Gehäuse 3, 4 mit einem Einlasskanal 6 für einen Druckluftstrom und eine Kammer 2 zur Aufnahme von Schalldämpfungsmaterial 2'. Der Einlasskanal 6 und die Kammer 2 sind senkrecht zum Druckluftstrom durch eine Trennplatte 8 voneinander getrennt, die in einem äußeren Umfangsbereich des Druckluftstromes oder des Einlasskanals 6 mehrere Öffnungen 9 aufweist, um die Druckluft in die Kammer 2 einzuleiten. Insbesondere können die Öffnungen 9 nur im äußeren Umfangsbereich regelmäßig ausgebildet sein, sodass die Trennplatte 8 keine Öffnungen in ihrem zentralen Bereich (z.B. in Bezug auf den Einlasskanal 6) aufweist.

Das Gehäuse 3,4 des Geräuschdämpfers ist in zwei Teile oder Abschnitte unterteilt: ein oberes, erstes Gehäuseteil 3 mit einem Verbindungsteil 5 und ein unteres, zweites Gehäuseteil 4. Das Verbindungsteil 5 enthält den Einlasskanal 6 und dient der Verbindung des Geräuschdämpfers mit einem beispielhaften Ventilkörper oder einer anderen Quelle von Druckluft, die geräuscharm abgebaut werden soll. Außerdem hat das Verbindungsteil 5 eine geringere Querschnittsfläche (senkrecht zum Druckluftstrom) als die Kammer 2. Daher bildet das obere Gehäuseteil 3 am Übergang zum Verbindungteil 5 einen Schulterbereich 11, der über Verstärkungselemente 12 mit dem Verbindungteil 5 abgestützt wird. Das untere Gehäuseteil 4 umfasst eine Bodenplatte 14 (Auslassplatte) mit darin ausgebildeten Auslassöffnungen 7, um die Druckluft schallgedämpft an eine Umgebung abzugeben.

Das obere Gehäuseteil 3 ist zusammen mit dem unteren Gehäuseteil 4 verbunden, um die Kammer 2 mit dem optionalen Schalldämpfungsmaterial 2' zu bilden. Die Verbindung kann ungefähr mittig erfolgen. Es ist aber ebenfalls möglich, dass die Verbindung zwischen den Gehäuseteilen 3, 4 am Schulterbereich 11 oder an der Bodenplatte erfolgt, sodass z.B. mehr als 90% des Volumens der Kammer 2 in dem oberen oder in dem unteren Gehäuseteil 3, 4 vorhanden sind. Das obere Gehäuseteil 3 kann mit dem unteren Gehäuseteil 4 optional über eine Einrastverbindung oder eine Bajonettverbindung verbunden werden.

Fig. 1B zeigt eine Draufsicht in den Einlasskanal 6 des Geräuschdämpfers hinein. In der Fig. 1B ist ersichtlich, wie entlang des äußeren Umfanges der Trennplatte 8 Öffnungen 9 in regelmäßigen Abständen vorgesehen sind, um den Druckluftstrom, der über den Einlasskanal 6 hineinströmt, in die dahinterliegende Kammer 2 weiterzuleiten.

Die Gehäuseteile 3, 4 sind beispielsweise aus einem Kunststoffmaterial gefertigt, da dies zum einen kostengünstig herstellbar ist, keine Korrosion aufweist und ein geringes Gewicht hat. Jedoch ist das Kunststoffmaterial häufig leicht deformierbar, was häufig nicht erwünscht ist, da es die Geräuschdämpfung einschränkt. Insbesondere bei plötzlichen Entlüftungen von Druckluftsystemen können Druckwellen durch plötzlich auftretende Luftdruckschwankungen vorkommen, die zu Vibrationen oder Deformationen des Gehäuses 3, 4 führen können. Um solche Deformationen zu unterdrücken können an verschiedenen Positionen des Geräuschdämpfers Verstärkungselemente ausgebildet sein. Beispiele hierfür sind die Verstärkungselemente 12 im Schulterbereich 11 oder Rippen 13, die entlang des äußeren Umfanges des Gehäuses 3, 4 ausgebildet sein können.

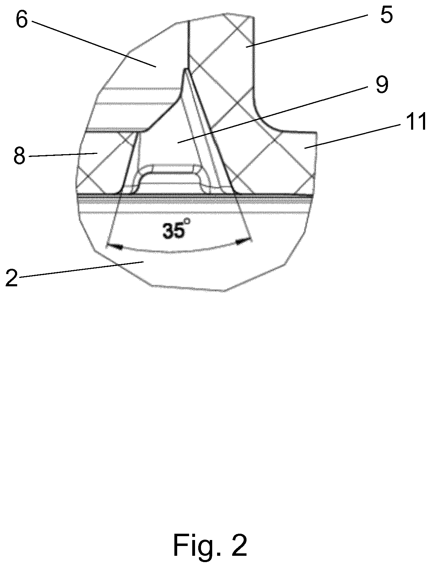

Fig. 2 zeigt eine vergrößerte Darstellung einer beispielhaften Öffnung 9, die den Einlasskanal 6 mit der darunterliegenden Kammer 2 verbindet. Diese Öffnung 9 ist zwischen der Trennplatte 8 und dem Schulterbereich 11 an jener Stelle ausgebildet, an der das Verbindungsteil 5 in den Schulterbereich 11 übergeht und somit in einem äußeren Randbereich der Trennplatte 8.

Die Öffnung 9 hat entlang des Druckluftstromes von oben nach unten einen sich verbreitenden Querschnitt, wobei der Öffnungswinkel beispielsweise 35° beträgt. Bei weiteren Ausführungsbeispielen kann der Öffnungswinkel entsprechend variabel gestaltet sein. Damit wird erreicht, dass der Druckluftstrom von dem Einlasskanal 6 sich möglichst breit in der Kammer 2 ausdehnen kann und somit zu einem schnellen Druckabbau führt. Beispielsweise ist die Summe der Querschnittsflächen aller Öffnungen 9 eine Fläche, die nicht mehr als 25% des Querschnittes des Einlasskanales 6 beträgt. Außerdem enden die Öffnungen 9 beispielsweise möglichst nahe am Schalldämpfungsmaterial 2', um sicherzustellen, dass der Druckluftfluss in mehreren Richtungen in das Schalldämpfungsmaterial 2' eingeleitet wird und durch dieses durchgedrückt wird.

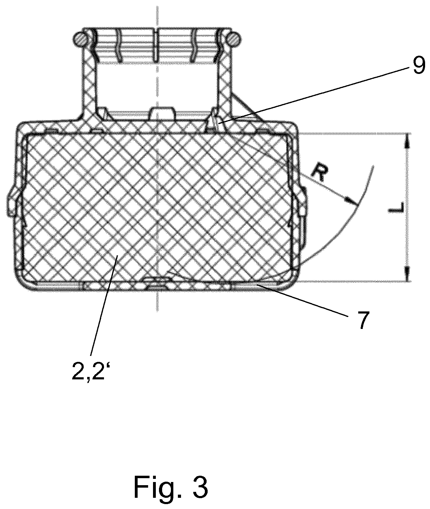

Die Fig. 3 zeigt eine Querschnittsansicht entlang des Druckluftflusses durch den Geräuschdämpfer, wobei oben der Einlasskanal 6 zu sehen ist und darunterliegend die breiter ausgestaltete Kammer 2 mit dem Schalldämpfungsmaterial 2' angeordnet ist.

Die Fig. 3 zeigt ebenfalls eine Öffnung 9, wie sie auch in der Fig. 2 beschrieben wurde. Die Geometrie des Gehäuses ist beispielsweise derart gebildet, dass die kürzeste Verbindung R zwischen der Öffnung 9 und der Austrittsöffnung 7 größer oder gleich ist der Höhe L, die die Kammer 2 entlang des Druckluftstromes aufweist. Dies bedeutet, dass

$$R \geq L$$

gilt. Dazu können beispielsweise die Auslassöffnungen 7 auf der gegenüberliegenden Seite zu dem Einlasskanal 6, aber teilweise auch an oder auf dem angrenzenden Bereich der Seitenwand vorgesehen sein. Damit wird sichergestellt, dass der Druckluftstrom möglichst lange in der Kammer 2 mit dem Schalldämpfungsmaterial 2' sich ausbreitet. Dies führt zu einer effizienten Schallreduktion.

Um die Geräuschdämpfung weiter zu optimieren, ist es vorteilhaft, wenn sich möglichst kein (Luft-) Spalt zwischen den oberen Abschnitten des Gehäuses (Schulterbereich 11 oder Trennplatte 8) und des Schalldämpfungsmaterials 2' herausbildet. Dies wird durch Ausführungsbeispiele sichergestellt. Außerdem ist es vorteilhaft, wenn während des Betriebes keine Spalten oder Lücken unter der Druckeinwirkung während der Entlüftung entstehen. Um dies zu erreichen, kann beispielsweise das Volumen der Kammer 2 vollständig oder zumindest zu mehr als 95% mit Schalldämpfungsmaterial 2' gefüllt werden. Es ist ebenfalls möglich, die Kammer 2 mit Schalldämpfungsmaterial 2' zu überfüllen. Dazu kann im unkomprimierten Zustand das Volumen des Schalldämpfungsmaterial 2' um bis zu 10% größer sein als das Volumen der Kammer 2. Beim Zusammenfügen der Gehäuseteile 3,4 wird das Schalldämpfungsmaterial 2' dann unter einer Vorspannung innerhalb der Kammer 2 sein. Dazu ist es vorteilhaft, wenn das Schalldämpfungsmaterial 2' beispielsweise eine gewisse Elastizität aufweist - trotz einer möglichen, begrenzten elastischen Deformationen des Gehäuses, um die Vorspannung zu erreichen.

Das Ausbilden eines ungewünschten Spaltes kann auch dadurch verhindert werden, dass das Gehäuse 3,4 - trotz Vorspannung durch das Schalldämpfungsmaterial 2' - sich möglichst nicht unter dem Einfluss des Druckluftstromes deformiert. Um dies zu verhindern, können Stabilisierungselemente an den Gehäuseteilen 3, 4 vorgesehen sein. Außerdem können Verbindungen zwischen den beiden Gehäuseteilen 3, 4 ausgebildet werden, um die Deformationen und besonders die Spaltenbildung unter dem

Geräuschdämpfmaterial 2' und den Gehäuseteilen 3 und 4 sowie zwischen den Gehäuseteilen 3, 4 während der Druckbelastung zu verringern. Im Prinzip gibt es drei Bereiche, die entsprechend abgesteift werden können:

1. Die bereits genannten Stützrippen 12 (siehe Fig. 1A) können den oberen Schulterbereich 11 am oberen Gehäuseteils 3 an dem Verbindungteil 5 abstützen, sodass ein Spalt zwischen dem Schulterbereich 11 und dem Geräuschdämpfungsmaterial 2' verhindert wird.

2. Das obere und/oder untere Gehäuseteil 3, 4 können zylinderförmig gebildet sein und mit Verstärkungselementen in Form von Rippen 13 abgesteift werden. Die Rippen 13 können beispielsweise in der Nähe des Bereiches, in welchem der obere und der untere Gehäuseteil 3, 4 miteinander verbunden werden, vorgesehen sein. Damit wird verhindert, dass sich ein Spalt zwischen den beiden Gehäuseteilen herausbilden kann.

3. Wie im Folgenden beschrieben wird, ist es ebenfalls möglich, Verstärkungselemente an der Bodenplatte 14 als Teil des unteren Gehäuses 4 vorzusehen, um axiale Bewegungen des geräuschreduzierenden Materials 2' zu verhindern.

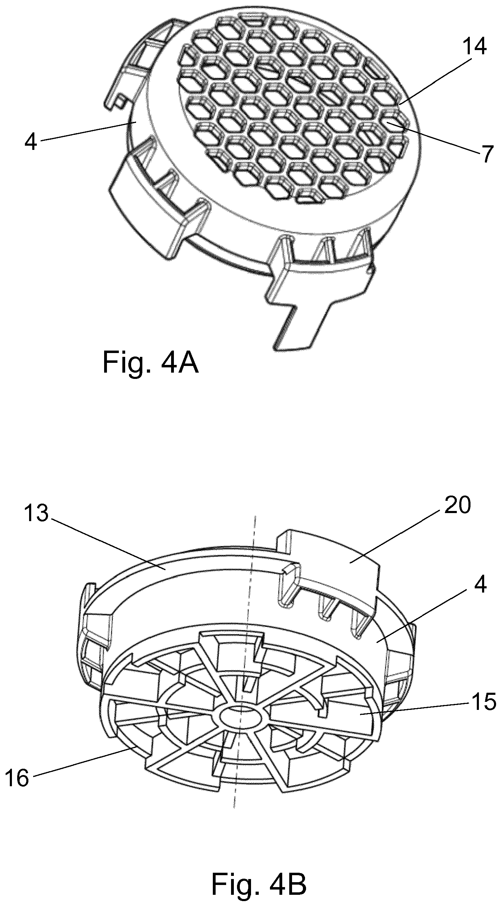

Die **Fig. 4A** bis **4C** zeigen Ansichten zu einer beispielhaften Gestaltung der Bodenplatte 14 mit den Austrittsöffnungen 7 gemäß Ausführungsbeispielen.

**Fig. 4A** zeigt zunächst ein Ausführungsbeispiel, bei dem die Austrittsöffnungen 7 ein wabenförmiges Muster in der Bodenplatte 14 bilden. Die Auslassöffnungen 7 in der Bodenplatte 14 oder deren Anzahl sind so groß gewählt, dass der Flusswiderstand minimiert wird. Auf der anderen Seite ist es vorteilhaft, wenn die Bodenplatte 14 steif genug ist, um signifikante axiale Deformationen als Folge von einer Verschiebung des geräuschreduzierenden Materials 2' auch unter Luftdruck zu verhindern. Dies kann beispielsweise durch die genannte wabenförmige Anordnung der Austrittsöffnungen 7 in der Bodenplatte 14 auf der unteren Oberfläche des Geräuschdämpfers erreicht werden. Dieses wabenförmige Muster kann beispielsweise gleichmäßig über die Bodenplatte 14 verteilt sein, wobei die Ränder der einzelnen Waben ausreichend dick bzw. verstärkt ausgebildet sein können, um eine Deformation bei dem Druckabbau zu minimieren. Es ist ebenfalls möglich, dass an einer Seitenfläche des Gehäuses 3, 4 entsprechende Auslassöffnungen vorgesehen sind (nicht in der Fig. 4A gezeigt).

**Fig. 4B** zeigt ein weiteres Ausführungsbeispiel des zweiten Gehäuseteil 4, an dem Befestigungsmittel 20 (zum Befestigen des ersten Gehäuseteils 3) und drei verschiedene Arten von Verstärkungselementen 13, 15, 16 ausgebildet sind, um Deformationen des zweiten Gehäuseteils 4 zu unterdrücken. Beispielhaft ist entlang des äußeren Umfanges des zweiten Gehäuseteils 4 eine Rippe 13 ausgebildet, die sich vollständig um das zweite Gehäuseteil 4 herum erstreckt bzw. zumindest zwischen den Befestigungselementen 20 ausgebildet ist. Außerdem zeigt das Ausführungsbeispiel konzentrische Rippen 16 und radiale Rippen 15, die an einer Außenseite der Bodenplatte 14 ausgebildet sind. Diese radialen und konzentrischen Rippen 15, 16 erstrecken sich axial (in der Druckluftströmungsrichtung) und dienen der Verhinderungen von Deformationen der Bodenplatte 14. Außerdem sind die radialen und konzentrischen Rippen 15, 16 in axialer Richtung unterschiedlich lang ausgebildet, sodass beispielsweise jede Öffnung 7 in der Bodenplatte 14 die Luft sowohl nach unten als auch in eine Seitenrichtung entlassen kann. Insbesondere weist die radial am weitesten außen liegende konzentrische Rippe 16 Aussparungen auf, um dadurch ebenfalls Öffnungen zur Seite bereitzustellen.

Diese Rippen 15, 16 sind insbesondere in einem Umfangsbereich derart geformt, dass die Druckluft auch dann aus dem Geräuschdämpfer herausgelangen kann, wenn ein anderes Objekt an einem Bodenbereich des Geräuschdämpfers vorhanden sein sollte. In diesem Fall kann die entweichende Luft in dem seitlichen Bereich zwischen den Rippen 15, 16 entweichen. Beispielsweise können an der Bodenplatte 14 die rippenförmigen Strukturen 15, 16 so ausgebildet werden, dass jede Auslassöffnung 7 die Druckluft sowohl in die axiale Richtung als auch seitlich davon freilassen kann. Dadurch wird die Wahrscheinlichkeit eines Verstopfens am Ausgang minimiert und eine sichere Funktionsweise des Geräuschdämpfers sichergestellt.

Die wabenförmige Struktur aus der Fig. 4A kann ebenfalls mit diesen sich axialen erstreckenden Rippen 15, 16 kombiniert werden.

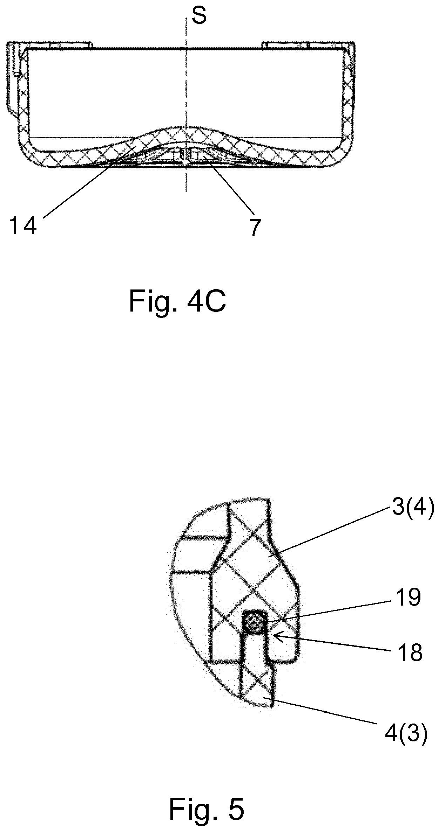

**Fig. 4C** zeigt eine Schnittdarstellung durch das zweite Gehäuseteil 4 gemäß einem weiteren Ausführungsbeispiel, bei welchem die Bodenplatte 14 eine konkave Form aufweist (betrachtet von der Außenseite des Gehäuses 3, 4). Beispielsweise können entlang der konkav gestalteten Bodenplatte 14 in regelmäßigen Abständen die Öffnungen 7 ausgebildet sein, die sich konzentrisch um die axiale Achse S herum erstrecken. Mit der konkav gestalteten Bodenplatte 14 wird erreicht, dass beim Zusammenfügen des ersten Gehäuseteils 3 mit dem zweiten Gehäuseteil 14 ein Druckaufbau für das Schalldämpfungsmaterial 2' innerhalb der Kammer 2 erreicht wird, welches dadurch unter einer Vorspannung gehalten werden kann, so dass Luftspalten zwischen dem Schalldämpfungsmaterial 2' und einem Gehäuseteil vermieden werden können.

**Fig. 5** zeigt eine beispielhafte Verbindung zwischen dem ersten Gehäuseteil 3 und dem zweiten Gehäuseteil 4. So kann zum Beispiel das erste Gehäuseteil 3 oder das zweite Gehäuseteil 4 eine Nut 18 aufweisen, in die ein Vorsprung des jeweils anderen Gehäuseteils 4 oder 3 einführbar ist, um eine Verbindung zwischen dem ersten Gehäuseteil 3 und dem zweiten Gehäuseteil 4 herzustellen. Optional ist es ebenfalls möglich, die Verbindung zwischen dem ersten und dem zweiten Gehäuseteil 3, 4 mit einer zusätzlichen Einrastverbindung oder einem Bajonettverschluss zu sichern. Bei weiteren Ausführungsbeispielen ist es ebenfalls möglich, dass innerhalb der Nut 18 eine Klebverbindung, eine Versiegelung, oder ein Dichtelement 19 vorgesehen ist, die einen festen und dichten Verschluss des Gehäuses 3, 4 sicherstellt.

Die Nutverbindung 18 verhindert beispielsweise, dass sich ein Spalt zwischen den Gehäuseteilen 3, 4 herausbilden kann. So kann die Nut 18 ausreichend tief ausgebildet werden, sodass das andere Gehäuseteil bzw. der entsprechende Vorsprung über eine größere Distanz axial in die Nut eingeführt wird. Etwaige Luftspalte können dabei verschwinden. Außerdem kann die Tiefe der Nut 18 derart gebildet werden, dass die ersten und zweiten Gehäuseteile 3, 4 soweit ineinandergeschoben werden können, dass eine ausreichende Vorspannung innerhalb des Schallreduktionsmaterials 2' erreicht wird.

Bei weiteren Ausführungsformen ist die Nut 18 und der Vorsprung entlang der Gehäuseteile 3, 4 derart gebildet, dass sie eine sich selbst verschließende Struktur darstellen.

Es versteht sich, dass nicht alle beschrieben Merkmale zusammen ausgebildet zu sein brauchen. Bei weiteren Ausführungsbeispielen können die einzelnen Merkmale beliebig miteinander kombiniert werden, um die mechanische Stabilität des Gehäuses des Geräuschdämpfers sicherzustellen und, um eine bessere Geräuschdämpfung zu erreichen.

Besonders vorteilhafte Aspekte beziehen sich auf folgende Ausführungsbeispiele:
Eine Geräuschreduktionseinheit für eine Entlüftung in Druckluftsystemen, insbesondere für Nutzfahrzeugbremssysteme, hat innerhalb des Gehäuses eine Trennplatte 8, die das Gehäuseinnere in zwei Abschnitte teilt, wovon ein Abschnitt einen Verbindungskanal 6 (zum Beispiel zu einem Entlüftungsventil) und der andere Abschnitt eine Geräuschdämpfungskammer 2 darstellt, die Schalldämpfungsmaterial 2' aufweist. Zwischen den beiden Kammern wird der Luftfluss über Öffnungen 9 geleitet, die in einem Randbereich des äußeren Umfanges der Trennplatte 8 (z.B. gleichmäßig) verteilt vorgesehen sind. Außerdem sind die beiden Kammern 6, 2 derart gebildet, dass der Luftstrom direkt in das geräuschreduzierende Material 2' gelangt, ohne einen Zwischenspalt zu passieren. Der ungewünschte Spalt zwischen dem Gehäuse 3, 4 und dem geräuschreduzierenden Material 2' kann durch die folgenden Maßnahmen verhindert werden (und zwar selbst dann, wenn ein Druckluftstrom hindurchgeleitet wird):

(a) die Kammer wird mit geräuschreduzierendem Material 2' überfüllt (sodass es unter Vorspannung ist);

(b) das Gehäuse 3, 4 wird mit Verstärkungselemente 12, 13, 15, 16 versteift, um Gehäusedeformationen zu minimieren.

Außerdem ist in weiteren vorteilhafte Ausführungsformen das Schallreduktionsmaterial 2' elastisch komprimierbar, so dass es beim Zusammenfügen der zwei Gehäuseteile 3, 4 unter einer Vorspannung permanent gehalten werden kann. Das Schallreduktionsmaterial 2' ist daher in einem direkten Kontakt zu den Einlassöffnungen 9, so dass die Druckluft direkt nach dem Verlassen der Einlassöffnungen 9 in das Schallreduktionsmaterial 2' eingeleitet wird.

Bei weiteren vorteilhaften Ausführungsbeispielen sind die Verstärkungselemente 13 als zylindrische Rippen ausgebildet, die sich an einer Außenseite des ersten Gehäuseteils 3 und/oder an einer Außenseite des zweiten Gehäuseteils 4 erstrecken. Außerdem können axial erstreckende Rippen 15, 16 an der Bodenplatte 14 vorgesehen sein, die unterschiedliche axiale Längen aufweisen, um somit ein Austritt der Druckluft hin zu einer Seite zu ermöglichen (zum Beispiel falls die Unterseite durch einen anderen Körper verdeckt sein sollte).

BEZUGSZEICHENLISTE

| | |
|---|---|
| 2 | Kammer |
| 2' | (optional vorhandenes) Schalldämpfungsmaterial |
| 3,4 | Gehäuse(teile) |
| 6 | Einlasskanal |
| 7 | Austrittsöffnungen |
| 8 | Trennplatte |
| 9 | (Einlass-) Öffnungen |
| 11 | Schulterbereich |
| 14 | Bodenplatte |
| 12,13,15,16 | Verstärkungselemente |
| 18 | Nutverbindung |
| 19 | Dichtelement |
| S | axiale Achse |

**Patentansprüche**

1. Geräuschdämpfer für Druckluftsysteme, insbesondere für Bremssysteme von Nutzfahrzeugen, umfassend:

ein Gehäuse (3, 4) mit einem Einlasskanal (6) für einen Druckluftstrom und einer Kammer (2) zur Aufnahme von Schalldämpfungsmaterial (2'),
wobei der Einlasskanal (6) und die Kammer (2) senkrecht zum Druckluftstrom durch eine Trennplatte (8) getrennt sind, die in einem zentralen Bereich geschlossen und in einem äußeren Umfangsbereich des Druckluftstromes mehrere Öffnungen (9) aufweist, um die Druckluft direkt in die Kammer (2) einzuleiten, **dadurch gekennzeichnet, dass** die mehreren Öffnungen (9) in der Trennplatte (8) entlang des Druckluftstromes in die Kammer (2) hinein einen sich verbreitenden Querschnitt aufweisen; und das Gehäuse (3, 4) auf einer Höhe der Kammer (2) einen Schulterbereich (11) aufweist, sodass die Kammer (2) entlang des Druckluftstromes eine größere Querschnittfläche aufweist als der Einlasskanal (6).

2. Geräuschdämpfer nach Anspruch 1, **gekennzeichnet durch** Schalldämpfungsmaterial (2'), das in direktem Kontakt zu der Trennplatte (8) steht und unter einer Vorspannung in der Kammer (2) vorhanden ist, sodass der Druckluftstrom nach einem Passieren der Öffnungen (9) direkt in das Schalldämpfungsmaterial (2') gelangt und im Betrieb ein Luftspalt zwischen Schalldämpfungsmaterial (2') und der Trennplatte (8) vermieden wird.

3. Geräuschdämpfer nach Anspruch 2, **dadurch gekennzeichnet, dass** das Schalldämpfungsmaterial (2') um bis zu 10 % elastisch komprimiert in der Kammer (2) angeordnet ist.

4. Geräuschdämpfer nach einem der vorhergehenden Ansprüche, **dadurch gekennzeichnet, dass** das Gehäuse (3, 4) entlang des Druckluftstromes gegenüberliegend zu der Trennplatte (8) eine Bodenplatte (14) mit einer Vielzahl von Austrittsöffnungen (7) für den Druckluftstrom aufweist, wobei die Austrittsöffnungen (7) insbesondere als ein wabenförmiges Muster in der Bodenplatte (14) ausgebildet sind.

5. Geräuschdämpfer nach Anspruch 4, **dadurch gekennzeichnet, dass** die Bodenplatte (14) eine Einbuchtung in die Kammer (2) bildet.

6. Geräuschdämpfer nach einem der vorhergehenden Ansprüche, **dadurch gekennzeichnet, dass** das Gehäuse (3, 4) ein erstes Gehäuseteil (3) und ein zweites Gehäuseteil (4) aufweist, wobei das erste Gehäuseteil (3) und das zweite Gehäuseteil (4) Verbindungsmittel aufweisen, um das erste Gehäuseteil (3) und das zweite Gehäuseteil (4) fest miteinander zu verbinden.

7. Geräuschdämpfer nach Anspruch 6, **dadurch gekennzeichnet, dass** die Verbindungsmittel zumindest eines dem Folgenden umfassen:

 - einen Bajonettverschluss;
 - eine Einrastverbindung;
 - eine Nutverbindung;
 - eine Klebverbindung.

8. Geräuschdämpfer nach einem der vorhergehenden Ansprüche, **gekennzeichnet durch** Verstärkungselemente (12, 13, 15, 16), die an zumindest einer der folgenden Positionen an dem Gehäuse (3, 4) ausgebildet sind:

 - Verbindungsbereich zwischen dem Schulterbereich (11) und dem Einlasskanal (6);
 - ringförmig entlang eines äußeren zylindrischen Umfanges der Kammer (2);
 - an den Austrittsöffnungen (7), wobei die Verstärkungselemente (15, 16) insbesondere radiale Rippen (15) und konzentrische Rippen (16) umfassen, zwischen denen die Austrittsöffnungen (7) ausgebildet sind.

9. Geräuschdämpfer nach einem der Ansprüche 6 bis 8, **dadurch gekennzeichnet, dass** die Verbindungsmittel eine dichte Verbindung zwischen dem ersten Gehäuseteil (3) und dem zweiten Gehäuseteil (4) bereitstellen, um einen unerwünschten Luftaustritt zwischen dem ersten Gehäuseteil (3) und dem zweiten Gehäuseteil (4) zu verhindern.

10. Geräuschdämpfer nach einem der Ansprüche 4 bis 9, **dadurch gekennzeichnet, dass** die Austrittsöffnungen (7) und/oder die Verstärkungselemente an der Bodenplatte (14) derart ausgebildet sind, dass der Druckluftstrom teilweise seitlich in radialer Richtung austritt.

11. Geräuschdämpfer nach einem der Ansprüche 4 bis 10, **dadurch gekennzeichnet, dass** das Gehäuse (3, 4) so gebildet, dass keine Austrittsöffnung (7) dichter an den Öffnungen (9) in der Trennplatte (8) sind als die Entfernung zwischen der Trennplatte (8) und der Bodenplatte (14).

12. Pneumatisches Bremssystem für ein Nutzfahrzeug mit einer Entlüftungseinrichtung, **gekennzeichnet durch** einen Geräuschdämpfer nach einem der Ansprüche 1 bis 11, dessen Drucklufteinlass (6) mit der Entlüftungseinrichtung verbunden ist.

**13.** Verfahren zur Herstellung eines Geräuschdämpfers für Druckluftsysteme, insbesondere für Bremssysteme von Nutzfahrzeuge, das ein Bilden eines Gehäuses (3, 4) umfasst und
**gekennzeichnet ist durch:**

- Ausbilden einem Einlasskanal (6) für einen Druckluftstrom;
- Ausbilden einer Kammer (2) zur Aufnahme von Schalldämpfungsmaterial (2');
- Ausbilden einer Trennplatte (8), die senkrecht zum Druckluftstrom den Einlasskanal (6) und die Kammer (2) trennt; und
- Ausbilden von mehreren Öffnungen (9) in einem äußeren Umfangsbereich des Druckluftstromes, um die Druckluft in die Kammer (2) einzuleiten,

wobei die mehreren Öffnungen (9) in der Trennplatte (8) entlang des Druckluftstromes in die Kammer (2) hinein einen sich verbreitenden Querschnitt aufweisen; und
das Gehäuse (3, 4) auf einer Höhe der Kammer (2) einen Schulterbereich (11) aufweist, sodass die Kammer (2) entlang des Druckluftstromes eine größere Querschnittfläche aufweist als der Einlasskanal (6).

**14.** Verfahren nach Anspruch 13,
**dadurch gekennzeichnet, dass**
die Kammer (2) mit dem Schalldämpfungsmaterial (2') voll ausgefüllt oder überfüllt wird.


**Claims**

**1.** A noise damper for compressed-air systems, in particular for brake systems of utility vehicles, comprising
a housing (3, 4) having an inlet channel (6) for a compressed-air flow and a chamber (2) to accommodate noise-damping material (2'),
the inlet channel (6) and the chamber (2) being separated perpendicular to the compressed-air flow by a separating plate (8) that is closed in a central region and has a plurality of openings in an outer peripheral region of the compressed-air flow in order to introduce the compressed air directly into the chamber (2),
**characterised in that**
the cross section of the plurality of openings (9) in the separating plate (8) broadens out along the compressed-air flow into the chamber (2); and
the housing (3, 4) has a shoulder region (11) at the level of the chamber (2) such that the cross-sectional surface of the chamber (2) along the compressed-air flow is larger than that of inlet channel (6).

**2.** A noise damper according to claim 1,
**characterised by**
noise-damping material (2') that is in direct contact with the separating plate (8) and is present under preload in the chamber (2) such that once it has passed through the openings (9) the compressed-air flow passes directly into the noise-damping material (2'), thereby avoiding an air gap between the noise-damping material (2') and the separating plate (8) during operation.

**3.** A noise damper according to claim 2,
**characterised in that**
the noise-damping material (2') is arranged elastically compressed by up to 10% in the chamber (2).

**4.** A noise damper according to any one of the preceding claims,
**characterised in that**
along the compressed-air stream and opposite the separating plate (8) the housing (3, 4) has a base plate (14) with a multiplicity of outlet openings (7) for the compressed-air flow, the outlet openings (7) forming, in particular, of a honeycomb pattern in the base plate (14).

**5.** A noise damper according to claim 4,
**characterised in that**
the base plate (14) forms a recess into the chamber (2).

**6.** A noise damper according to any one of the preceding claims,
**characterised in that**
the housing (3, 4) has a first housing part (3) and a second housing part (4), the first housing part (3) and the second housing part (4) having connecting means for permanently connecting the first housing part (3) and the second housing part (4) to one another.

**7.** A noise damper according to claim 6,
**characterised in that**
the connecting means comprise at least one of the following:

- a bayonet fixing;
- a snap-in connection;
- a groove-type connection;
- an adhesive connection.

**8.** A noise damper according to any of the preceding claims,
**characterised by**
reinforcing elements (12, 13, 15, 16) that are formed in at least one of the following positions on the housing (3, 4):

- in the connecting region between the shoulder region (11) and the inlet channel (6);
- in the form of a ring along an outer cylindrical periphery of the chamber (2);
- at the outlet openings (7), the reinforcing elements (15, 16) comprising in particular radial ribs (15) and concentric ribs (16) between which the outlet openings (7) are formed.

9. A noise damper according to any one of claims 6 to 8, **characterised in that** the connecting means provide a sealed connection between the first housing part (3) and the second housing part (4) in order to prevent the undesired escape of air between the first housing part (3) and the second housing part (4).

10. A noise damper according to any one of claims 4 to 9, **characterised in that** the outlet openings (7) and/or the reinforcing elements are formed on the base plate (14) such that part of the compressed-air stream exits laterally in a radial direction.

11. A noise damper according to any one of claims 4 to 10, **characterised in that** the housing (3, 4) is formed such that none of the outlet openings (7) is closer to the openings (9) in the separating plate (8) than the distance between the separating plate (8) and the base plate (14).

12. A pneumatic brake system for a utility vehicle having a venting device, **characterised by** a noise damper according to any one of claims 1 to 11 having a compressed-air inlet (6) that is connected to the venting device.

13. A method for producing a noise damper for compressed-air systems, in particular for brake systems of utility vehicles, which method comprises the formation of a housing (3, 4) and **is characterised by:**

- the formation of an inlet channel (6) for a compressed-air flow;
- the formation of a chamber (2) to accommodate noise-damping material (2');
- the formation of a separating plate (8) that separates the inlet channel (6) and the chamber (2) perpendicular to the compressed-air flow; and
- the formation of a plurality of openings (9) in an outer peripheral region of the compressed-air flow in order to introduce the compressed air into the chamber (2),

the cross section of the plurality of openings (9) in the separating plate (8) broadening out along the compressed-air flow into the chamber (2); and the housing (3, 4) having a shoulder region (11) at the level of the chamber (2) such that the cross-sectional surface of the chamber (2) along the compressed-air flow is larger than that of inlet channel (6).

14. A method according to claim 13, **characterised in that** the chamber (2) is filled with or overfilled with noise-damping material (2').

## Revendications

1. Amortisseur de bruit de systèmes d'air comprimé, notamment de systèmes de frein de véhicules utilitaires, comprenant :

   un boîtier (3, 4) ayant un conduit (6) d'entrée d'un courant d'air comprimé et une chambre (2) de réception de matériau (2') d'amortissement du bruit,
   dans lequel le conduit (6) d'entrée et la chambre (2) sont séparés perpendiculairement au courant d'air comprimé par une plaque (8) de séparation, qui est fermée dans une partie centrale et qui a plusieurs ouvertures (9) dans une partie périphérique extérieure du courant d'air comprimé, afin d'introduire l'air comprimé directement dans la chambre (2),
   **caractérisé en ce que**
   les plusieurs ouvertures (9) de la plaque (8) de séparation ont suivant le courant d'air comprimé en pénétrant dans la chambre (2) une section transversale qui s'élargit ; et
   le boîtier (3, 4) a à un niveau de la chambre (2) une partie (11) d'épaulement de manière à ce que la chambre (2) ait, le long du courant d'air comprimé, une surface de section transversale plus grande que le conduit (6) d'entrée.

2. Amortisseur de bruit suivant la revendication 1, **caractérisé par** un matériau (2') d'amortissement du bruit, qui est en contact direct avec la plaque (8) de séparation et qui est présent sous une précontrainte dans la chambre (2) de manière à ce que le courant d'air comprimé après avoir passé dans les ouvertures (9) arrive directement dans le matériau (2') d'amortissement du bruit et de manière à éviter en fonctionnement un intervalle d'air entre le matériau (2') d'amortissement du bruit et la plaque (8) de séparation.

3. Amortisseur de bruit suivant la revendication 2, **caractérisé en ce que** le matériau (2') d'amortissement du bruit est comprimé élastiquement jusqu'à 10 % dans la chambre (2).

4. Amortisseur de bruit suivant l'une des revendications précédentes,
   **caractérisé en ce que**
   le boîtier (3, 4) a le long du courant d'air comprimé, en face de la plaque (8) de séparation, une plaque (14) de fond ayant une pluralité d'ouvertures (7) de sortie pour le courant d'air comprimé, les ouvertures (7) de sortie étant constituées notamment sous la forme d'un motif en nid d'abeille dans la plaque (14) de fond.

5. Amortisseur de bruit suivant la revendication 4,
   **caractérisé en ce que**
   la plaque (14) de fond forme une bosse rentrante dans la chambre (2).

6. Amortisseur de bruit suivant l'une des revendications précédentes,
   **caractérisé en ce que**
   le boîtier (3, 4) a une première partie (3) de boîtier et une deuxième partie (4) de boîtier, dans lequel la première partie (3) de boîtier et la deuxième partie (4) de boîtier ont des moyens de liaison pour relier rigidement entre elles la première partie (3) de boîtier et la deuxième partie (4) de boîtier.

7. Amortisseur de bruit suivant la revendication 6,
   **caractérisé en ce que**
   les moyens de liaison comprennent au moins l'un des suivants :

   - une fermeture à baïonnette ;
   - une liaison à encliquetage ;
   - une liaison à rainurage ;
   - une liaison par collage.

8. Amortisseur de bruit suivant l'une des revendications précédentes,
   **caractérisé par**
   des éléments (12, 13, 15, 16) de renfort, qui sont constitués en au moins l'une des positions suivantes sur le boîtier (3, 4) :

   - partie de liaison entre la partie (11) d'épaulement et le conduit (6) d'entrée ;
   - annulairement le long d'un contour cylindrique extérieur de la chambre (2) ;
   - sur les ouvertures (7) de sortie, les éléments (15, 16) de renfort comprenant notamment des nervures (16) radiales et des nervures (16) concentriques entre lesquelles les ouvertures (7) de sortie sont constituées.

9. Amortisseur de bruit suivant l'une des revendications 6 à 8,
   **caractérisé en ce que**
   les moyens de liaison procurent une liaison étanche entre la première partie (3) du boîtier et la deuxième partie (4) de boîtier pour empêcher toute sortie intempestive d'air entre la première partie (3) du boîtier et le deuxième partie (4) du boîtier.

10. Amortisseur de bruit suivant l'une des revendications 4 à 9,
    **caractérisé en ce que**
    les ouvertures (7) de sortie et/ou les éléments de renfort sont constitués sur la plaque (14) de fond de manière à ce que le courant d'air comprimé sorte au moins en partie latéralement dans la direction radiale.

11. Amortisseur de bruit suivant l'une des revendications 4 à 10,
    **caractérisé en ce que**
    le boîtier (3, 4) est constitué de manière à ce qu'aucune ouverture (7) de sortie ne soit plus près des ouvertures (9) de la plaque (8) de séparation, que la distance entre la plaque (8) de séparation et la plaque (14) de fond.

12. Système de frein pneumatique d'un véhicule utilitaire ayant un dispositif de purge
    **caractérisé par**
    un amortisseur de bruit suivant l'une des revendications 1 à 11, dont l'entrée (6) d'air comprimé communiqué avec le dispositif de purge.

13. Procédé de fabrication d'un amortisseur de bruit de système à air comprimé, notamment de système de frein de véhicule utilitaire, qui comprend une constitution d'un boîtier (3, 4) et **caractérisé par:**

    - la constitution d'un conduit (6) d'entrée pour un courant d'air comprimé ;
    - la constitution d'une chambre (2) pour la réception de matériau (2') d'amortissement du bruit ;
    - la constitution d'une plaque (8) de séparation, qui sépare perpendiculairement au courant d'air comprimé le conduit (6) d'entrée et la chambre (2) ; et
    - la constitution de plusieurs ouvertures (9) dans une partie périphérique extérieure du courant d'air comprimé afin d'introduire l'air comprimé dans la chambre (2),

    dans lequel les plusieurs ouvertures (9) de la plaque (8) de séparation ont une section transversales qui s'élargit le long du courant d'air comprimé en pénétrant dans la chambre (2) ; et le boîtier (3, 4) a à un niveau de la chambre (2) une partie (11) d'épaulement de manière à ce que la chambre (2) ait le long du courant d'air comprimé une surface de section transversale plus grande que le conduit (6) d'entrée.

14. Procédé suivant la revendication 13,
**caractérisé en ce que**
la chambre (2) est remplie complètement ou comblée du matériau (2') d'amortissement du bruit.

6

12

13

5

8

9

11

3

2,2'

4

14

7

## Fig. 1A

12

11

8

6

9

## Fig. 1B

Fig. 2

Fig. 3

Fig. 4A

Fig. 4B

S

14                    7

## Fig. 4C

3(4)

19

18

4(3)

## Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0708007 B1
- DE 19701361 C1
- WO 2009152884 A3
- DE 4040278 A1
- DE 102013013281 A1
- EP 0093842 A
- DE 2910209